# EUROPÄISCHE PATENTSCHRIFT

(11) **EP 1 554 172 B1**
(45) Veröffentlichungstag und Bekanntmachung des Hinweises auf die Patenterteilung: **12.05.2010**
(21) Anmeldenummer: 03750223.4
(22) Anmeldetag: 08.10.2003
(51) Int. Cl.: B62D 55/24

(54) **RAUPE FÜR EIN FAHRZEUG**
CATERPILLAR RACK FOR A VEHICLE
CHENILLE DESTINEE A UN VEHICULE

(30) Priorität: 10.10.2002 CH 168602
(43) Veröffentlichungstag der Anmeldung: 20.07.2005
(73) Patentinhaber: Moser, Patrik, 9000 St. Gallen (CH); Heis, Günther, 7500 St. Moritz (CH)
(72) Erfinder: Moser, Patrik, 9000 St. Gallen (CH); Heis, Günther, 7500 St. Moritz (CH)
(74) Vertreter: Mötteli-Mantelli, Novella
(86) Internationale Anmeldenummer: PCT/CH2003/000661
(87) Internationale Veröffentlichungsnummer: WO 2004/033276

(56) Entgegenhaltungen:
- EP-A- 1 211 169
- DE-A- 3 530 686
- US-A- 4 681 377
- US-B1- 6 203 125

## Beschreibung

Die vorliegende Erfindung betrifft eine Raupe für ein Fahrzeug, insbesondere für ein Pistenfahrzeug oder ein Loipenspurgerät, mit zumindest einem Raupenband, dessen Grundkörper durch ein nachgiebiges Material gebildet ist, in welchem eine Lage aus einem Gewebe eingebettet ist.

Aus DE-A 35 30 686 ist eine Raupe dieser Gattung bekannt. Diese Raupe umfasst mehrere Raupenbänder. Der jeweilige Raupenband weist einen Grundkörper auf, welcher aus Gummi oder einem gummiähnlichen Kunststoff ist und Verstärkungseinlagen enthält. Das Raupenband besteht aus fünf Schichten. Die mittig befindliche Schicht hat einvulkanisiert gestreckte Längsfäden als Cordfäden aus Aramid, welche sich in der Bewegungsrichtung des Raupenbandes erstrecken. Die zu den beiden Seiten dieser mittigen Schicht liegenden Schichten des Raupenbandes enthalten je eine Gewebelage mit quer zum Raupenband liegenden, im wesentlichen gestreckt verlaufenden Kettfäden aus Polyamid oder dgl. Die genannten Schichten enthalten auch wellenförmig verlaufende Schussfäden, welche den Kettfäden des Gewebes zugeordnet sind.

Ein plötzlicher Riss des Bandes mitten im Betrieb unter Vollart kann beträchtliche mechanische Schäden an einem Pistenfahrzeug nach sich ziehen.

Die Aufgabe der vorliegenden Erfindung ist, den genannten sowie noch weitere Nachteile des Standes der Technik zu beseitigen.

Diese Aufgabe wird bei der Raupe der eingangs genannten Gattung erfindungsgemäss so gelöst, wie dies in der kennzeichnenden Teilen des Patentansprüche 1 und 5 definiert ist.

Nachstehend werden Ausführungsbeispiele der vorliegenden Erfindung anhand der beiliegenden Zeichnungen näher erläutert. Es zeigt:
Fig. 1 in einer Seitenansicht ein Pistenfahrzeug, welches mit den vorliegenden Raupen ausgerüstet ist,
Fig. 2 perspektivisch eine der Umlenkpartien einer der Raupen des Pistenfahrzeuges aus Fig. 1,
Fig. 3 perspektivisch und teilweise im Querschnitt eine erste Ausführung des vorliegenden Raupenbandes, welches mit einem einfachen Aramidfasercord-Gewebe verstärkt ist,
Fig. 4 perspektivisch und teilweise im Querschnitt eine zweite Ausführung des vorliegenden Raupenbandes, welches mit einem Aramid-Nylon-Mischfasergewebe verstärkt ist, und
Fig. 5 perspektivisch und teilweise im Querschnitt eine dritte Ausführung des vorliegenden Raupenbandes, welches mit einem asymmetrischen Aramidfaser-Zugstranggewebe und darüber liegendem Nylongewebe verstärkt ist.

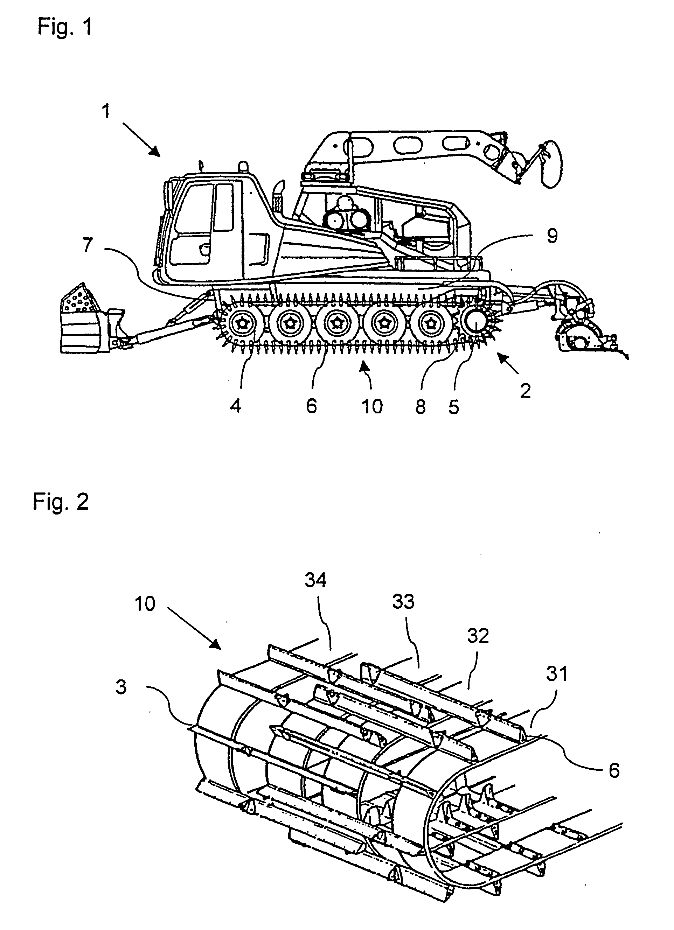

Fig. 1 zeigt in einer Seitenansicht ein an sich bekanntes Pistenfahrzeug 1, dessen Fahrwerk 2 die vorliegenden Raupen 10 aufweist. Vorne sind die Raupen 10 um ein Umlenkrad 4 und hinten um ein Antriebsrad 5 umgelenkt. Diese Räder 4 und 5 sind in den Seitenwänden 9 eines Fahrgestelles 7 des Fahrwerkes 2 des Pistenfahrzeuges 1 drehbar gelagert. Das Fahrgestell 7 kann als eine Wanne ausgeführt sein und die Räder 4 und 5 sind in den Seitenwänden 9 dieser Wanne 7 drehbar gelagert. Das jeweilige Rad 4 bzw. 5 befindet sich in einem Abstand von der betreffenden Seitenwand des Fahrgestells 7. Das Umlenkrad 4 weist einen glatten Kranz auf, während vom Kranz des Antriebsrades 5 voneinander regelmässig beabstandete Nocken 8 abstehen, welche zur Übertragung von Kraft vom Antriebsrad 5 zur Raupe 10 dienen.

Fig. 2 zeigt perspektivisch jene Partie einer der Raupen 10 des Pistenfahrzeuges 1 aus Fig. 1, welche um das Antriebsrad 5 umgelenkt ist. Die Raupe 10 umfasst im dargestellten Beispiel vier nebeneinander liegende Bänder 31, 32, 33 und 34, welche parallel zueinander verlaufen und welche in Abständen voneinander angeordnet sind. Die zwei ersten Raupenbänder 31 und 32 liegen zwischen dem Antriebsrad 5 und dem Fahrgestell 7. Das Antriebsrad 5 liegt zwischen dem zweiten Raupenband 32 und dem dritten Raupenband 33. Weiter entfernt vom Fahrgestell 7 ist das vierte Raupenband 34.

Die jeweilige Raupe 10 umfasst ferner zwei Gruppen von Stegen 3 und 6, welche sich senkrecht zur Längsrichtung der Raupenbänder 31 bis 34 erstrecken. Die Stege 3 der ersten Gruppe wechseln mit den Stegen 6 der zweiten Gruppe ab. Die Länge der Stege 3 und 6 ist kleiner als die Breite der Raupe 10. Im dargestellten Fall sind die Stege 3 und 6 nur so lang, dass sich der jeweilige Steg 3 bzw. 6 über die Breite von nur drei Raupenbändern erstreckt. Die Stege 3 der ersten Gruppe erstrecken sich vom zweiten Raupenband 32 bis zum vierten Raupenband 34. Die Stege 6 der zweiten Gruppe erstrecken sich vom ersten Raupenband 31 bis zum dritten Raupenband 33. Die Stege 3 und 6 erstrecken sich jeweils über die ganze Breite des jeweiligen Raupenbandes 31 bis 34.

Im dargestellten Fall sind die Stege 3 und 6 als Hohlprofile ausgeführt, welche beispielsweise aus Aluminium sind. Diese Stege 3 und 6 befinden sich an der Aussenseite der Raupenbänder 31 bis 34 und der jeweilige Steg 3 bzw. 6 ist mit den unter diesem liegenden Abschnitten der Raupenbänder 31 bis 34 fest verbunden. Unter anderem stellen die so angeschlossenen Stege 3 und 6 den Abstand der Raupenbänder 31 bis 34 voneinander sicher. Der Anschluss der Stege 3 und 6 an die Raupenbänder 31 bis 34 kann in einer an sich bekannten Weise erfolgen, beispielsweise mit Hilfe von Schrauben. Diese gehen durch den jeweiligen Steg 3 bzw. 6 und den darunter liegenden Abschnitt des Raupenbandes 31 bis 34 hindurch.

Der Abstand zwischen zwei benachbarten bzw. zwischen zwei hintereinander liegenden Stegen 3 und 6 entspricht den Abmessungen einer der Nocken 8 am Antriebsrad 5, sodass diese Nocken 8 in den Freiraum zwischen zwei benachbarten bzw. aufeinander folgenden Stegen 3 und 6 eindringen können. Die Stege 3 und 6 leiten einerseits die Kraft vom Antriebsrad 5 in das jeweilige Raupenband 31 bis 34 und andererseits die Abstosskräfte in den Schnee ein. Jene Raupenbänder 31 und 32, welche zum Fahrgestell 7 näher liegen, erfahren während dem Betrieb des Fahrzeugs 1 eine höhere Belastungen als die vom Fahrgestell 7 entfernt liegenden Raupenbänder 33 und 34. Deswegen müssen die innenliegenden Raupenbänder 31 und 32 etwas stärker dimensioniert sein, z.B. mit 2000N/cm als die aussen liegenden Raupenbänder 33 und 34 , welche z.B. mit nur 1600N/cm dimesioniert sein können.

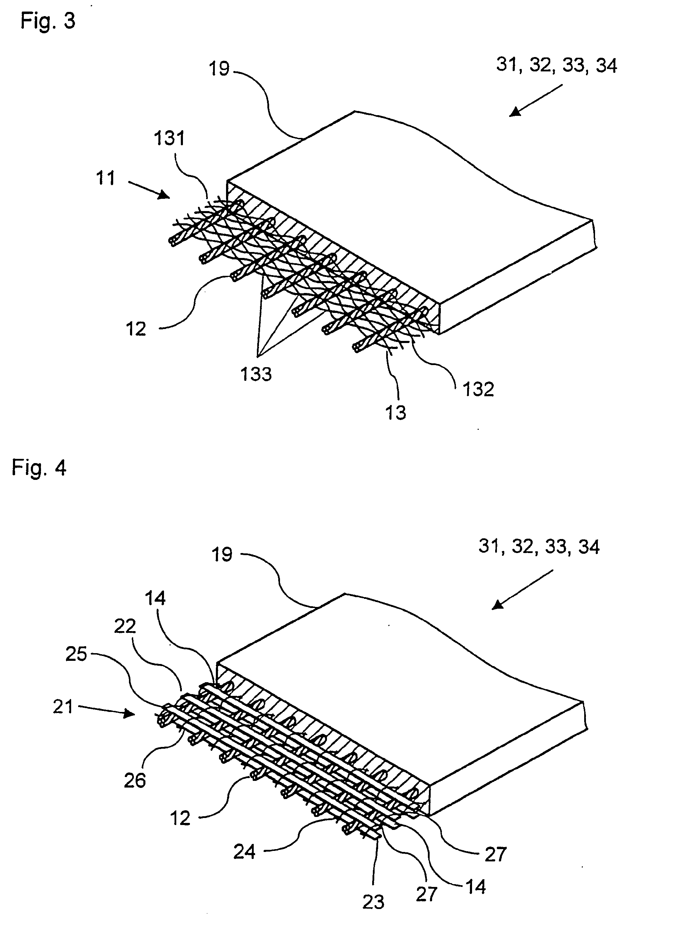

Das jeweilige Raupenband 31 bis 34 hat als Grund- bzw. Trägermaterial 19 (Fig. 3) ein weiches, nachgiebiges Material, wie z.B. Gummi, Neoprene, NBR oder ähnliches. Zur Verstärkung dieses Materials 19 enthält das Raupenband eine Lage 11 aus einem Gewebe. Diese erste Ausführung des Gewebes 11 weist einen Satz von Kettfäden 12 und einen Satz 13 von Paaren von Schussfäden 131 und 132. Die Kettfäden 12 verlaufen in der Längsrichtung des Raupenbandes. Die Schussfäden 131 und 132 verlaufen senkrecht dazu und sie sind im in Fig. 3 dargestellten Fall aus Nylon. Die Fäden 131 und 132 des Schusses 13 kreuzen sich entlang ihrem Verlauf senkrecht zur Längsrichtung des Raupenbandes. Der jeweilige Kreuzungspunkt 133 der Fäden 131 und 132 des Schusses 13 liegt zwischen zwei benachbarten Kettfäden12. Die Lage des jeweiligen Kettfadens 12 innerhalb der Breite des Raupenbandes ist durch die sich so kreuzenden Schussfäden 131 und 132 fixiert. Diese so verwobenen Paare aus den Nylonfäden 131 und 132 sorgen somit einerseits für den Zusammenhalt des Gewebes und andererseits erhöhen sie die Querstabilität des Raupenbandes.

Die Kettfäden 12 dieser ersten Ausführung des Zugstranggewebes 11 sind aus Aramid-Fasern. Aramid-Fasern sind ca. 5 mal stärker als Stahl bei gleichem Gewicht. Zu einem Cord verarbeitet sind sie elastisch und geschmeidig. Aramidfaser-Cord (z.B. Kevlar 29) dient somit als Zugstränge, welche in das Raupenband eingearbeitet sind. Die Aramid-Fasern sind unter der Verwendung von RFL (Resorcin-Formatin-Latex-) Lösung miteinander verbunden. Mit dieser Behandlung des Gewebes 11 wird auch die beste Haftung des Trägermaterials 19 auf dem Gewebe 11 erreicht. Das Mischgewebe 11 aus Nylon 13 und aus Aramidfasercorde 12 als Zugstränge, z.B. aus Kevlar 29, werden mit allfällig zusätzlichen Gewebeeinlagen zum elastischen Raupenband vulkanisiert.

Wegen dem grossen Verhältnis der Breite des Raupenbandes zur Höhe desselben muss auf die Stabilität innerhalb des Raupenbandes ein besonderes Augenmerk gelegt werden. Die Aramidfäden 12 weisen einen runden Querschnitt auf. Bei hohen Belastungen des Raupenbandes reissen die Aramidfäden 12 wegen ihrer sehr hohen Zugfestigkeit zwar nicht, aber sie können sich wegen der kreisförmigen Kontur ihres Querschnittes in das verhältnismässig weiche Trägermaterial 19 des Raupenbandes einschneiden. Unter besonders ungünstigen Verhältnissen können die Aramidfäden das Trägermaterial 19 durchschneiden und aus der Oberfläche des weichen Trägermaterials 19 sogar austreten.

Um dies zu verhindern, ist eine zweite Ausführung des Zugstranggewebes 21 vorgesehen (Fig. 4). Dieses Gewebe 21 weist ebenfalls einen Satz 12 von Kettfäden, welche in der Längsrichtung des Raupenbandes verlaufen. Diese Kettfäden 12 enthalten ebenfalls Aramid-Fasern. Das Gewebe 21 umfasst ferner zwei Sätze 22 und 23 von Bändern bzw. Filamenten 14, welche senkrecht bzw. quer zur Zugrichtung des Raupenbandes und somit auch senkrecht bzw. quer zur Längsrichtung der Kettfäden 12 verlaufen. Die Bänder 14 können flache Nylonfilamente bzw. Nylonbändern sein. Die Bänder 14 verlaufen in jener Richtung, in welcher die Schussfäden des Gewebes 21 verlaufen würden. Bei diesem Gewebe 21 sind jedoch keine Schussfäden vorhanden. Die Bänder 14 sind in der Längsrichtung des Raupenbandes in Abständen voneinander bzw. hintereinander angeordnet.

Der erste Satz 22 der Bänder 14 befindet sich oberhalb der Kettfäden12 und der zweite Satz 23 der Bänder 14 befindet sich unterhalb der Kettfäden 12. Die Bänder 14 sind ausserdem auch so angeordnet, dass ein Band 14 des oben liegenden Bändersatzes 22 oberhalb eines Bandes 14 des unteren Bändersatzes 23 liegt. Das jeweilige Band 14 der Sätze 22 und 23 verläuft geradlinig und es liegt mit einer seiner Grossflächen auf den Kettfäden 12 auf. Folglich fassen die flachen Bänder 14 die Aramid-Zugstränge 12 flach ein (Fig.4).

Bei Belastung der Raupenbänder während des Betriebes des Fahrzeugs 1 liegen die Aramid-Kettfäden 12 auf der betreffenden Grossfläche der sich oberhalb und unterhalb der Aramidfäden 12 befindlichen und sich senkrecht zu diesen erstreckenden flachen Querbänder 14 auf. Dadurch vergrössert sich jene Fläche, über welche die Kräfte von den Aramidfäden 12 mit einem runden Querschnitt in das diese Fäden 12 umgebende weiche Trägermaterial 19 geleitet werden. Wegen einer solchen grossflächigen Abstützung der Kettfäden 12 im Inneren des Trägermaterials 19 kann das Raupenband während des Betriebes des Fahrzeugs 1 höher als bisher belastet werden, ohne dass sich die Aramidfäden 12 in das weiche Trägermaterial 19 dabei einschneiden.

Die Raupenbänder werden während des Betriebes des Fahrzeuges an den Umlenkstellen 4 und 5 der Raupen 10 ständig auf Biegung beansprucht. Hierbei könnten sich die Kanten der steifen und im weichen Trägermaterial 19 flach eingebetteten Stützbänder 14 in dieses weiche Trägermaterial 19 einschneiden. Dies hätte zur Folge, dass die Nylonbänder 14 ihre ursprüngliche Stelle im Trägermaterial 19 nach einer gewissen Betriebszeit der Raupe 10 verlassen könnten. Dadurch könnte die genannte Abstützung der Kettfäden 12 im Trägermaterial 19 leiden.

Um dies zu verhindern, verläuft in der Längsrichtung des Raupenbandes noch ein zweiter Satz von Haltemitteln 24 für die Bänder 14. Das jeweilige Haltemittel 24 umfasst ein Paar von Fäden 25 und 26, welche ebenfalls aus Nylon sein können. Der Durchmesser der Fäden 25 und 26 dieser Hilfskette 24 ist kleiner als der Durchmesser der Nylonfäden bei der ersten Ausführung des Gewebes 11. Das jeweilige Haltemittel 24, d.h. die Fäden 25 und 26 dieses Haltemittels 24, befinden sich zwischen zwei benachbarten Aramidfäden 12 der Hauptkette.

Die Fäden 25 und 26 des jeweiligen Hilfskette 24 kreuzen sich entlang der Längsrichtung des Raupenbandes. Der jeweilige Kreuzungspunkt 27 der Fäden 25 und 26 der Hilfskette 24 liegt zwischen zwei benachbarten bzw. aufeinander folgenden Bänderpaaren, wobei ein Bänderpaar ein Band 14 des oben liegenden Satzes 22 und ein Band 14 des unten liegenden Satzes 23 umfasst. Die Bänder 14 eines solchen Paares liegen, wie bereits ausgeführt, übereinander. Die das jeweilige Paar von Bändern 14 einfassenden Fadenschlingen bzw. Fadenbogen, welche sich zwischen zwei aufeinander folgenden Kreuzungspunkten 27 der Fäden 25 und 26 erstrecken, liegen auf der Aussenseite der Bänder 14 des betreffenden Paares auf, sodass die genannten Bogen der Hilfsfäden 25 und 26 die dazwischen liegenden Bänder 14 gegeneinander hin drücken und auf die Aussenseite der Fäden 12 der Hauptkette pressen.

Die flachen Querbahnen bzw. die Nylonfilamente 14 sind mit den Fäden 25 und 26 der Hilfskette 24 verwoben. Dank den Kreuzungspunkten 27 der Hilfsmittel 24 sind die Bänderpaare 14 im weichen Trägermaterial 19 an Ort und Stelle dauerhaft gehalten. Dadurch entsteht ein Gewebe mit zwei Kettsystemen 12 und 24, das in allen Richtungen und über eine lange Zeitspanne sehr stabil ist. Die geforderte Elastizität des Raupenbandes bleibt jedoch erhalten.

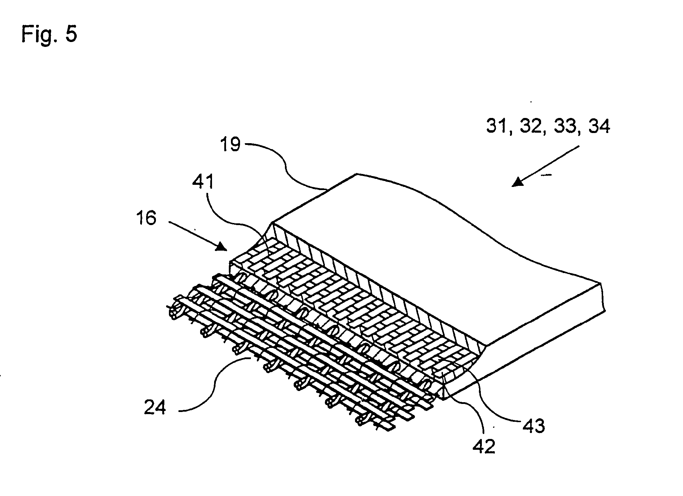

Obwohl das Raupenband verhältnismässig dünn ist, werden die übereinander liegenden Schichten des Raupenbandes im Bereich der Umlenkstellen 4 und 5 dennoch in unterschiedlicher Weise beansprucht. Die den Umlenkrädern 4 und 6 näher liegenden Raupenbandschichten werden im Bereich der Umlenkstellen 4 und 5 gestaucht, während die von den Umlenkrädern 4 und 5 entfernt liegenden Raupenbandschichten werden im Bereich der Umlenkstellen 4 und 5 gestreckt. Um die Kräfte an den Umlenkstellen 4 und 5 mit dem Raupenband optimal übertragen zu können, ist es zweckdienlich, das Zugstranggewebe 11 bzw. 21 in jenem Bereich, z.B. in jenem Drittel des Querschnittes des Raupenbandes anzuordnen (Fig. 5), welches näher zu den Umlenkrollen 4 und 5 liegt

Einher mit der vorstehend genannten Massnahme geht jedoch die Stabilität des Raupenbandes in den von den Umlenkrädern 4 und 5 entfernt liegenden Bereichen des Raupenbandes verloren. Um auch diese zuletzt genannten Bereiche des Raupenbandes stabil zu machen, ist eine weitere bzw. dritte Ausführung eines Zugstranggewebes 41 vorgesehen. Dieses Zugstranggewebe 41 besteht aus zwei senkrecht zueinander verlaufenden Sätzen von flachen Bändern 42 und 43, beispielsweise von Nylonbändern, welche untereinander wie ein Matte verflochten sind. Die Bänder 42 des ersten Satzes verlaufen in der Längsrichtung des Raupenbandes. Die Bänder 43 des zweiten Satzes verlaufen senkrecht zur Längsrichtung des Raupenbandes. Diese Gewebe bzw. diese Matte 41 ist im oberen bzw. äusseren Bereich des Raupenbandes eingebettet. Diese Matte 41 befindet sich somit oberhalb des Zugstranggewebes 11 bzw. 21 und sie verläuft praktisch parallel zu diesem Zugstranggewebe 11 bzw. 21, welches sich im unteren Bereich des Raupenbandes befindet. Durch diese zusätzlich Massnahme wird die genannte verlorene Stabilität des Raupenbandes zumindest wieder hergestellt oder sogar gesamthaft noch erhöht. Die beiden Gewebe 11 bzw. 21 und 41 werden dann mit dem Trägermaterial 19 zu einem elastischen Raupenband vulkanisiert.

Die Einarbeitung von einem Zugstranggewebe aus Aramidfaser-Cord in Raupenbänder von Pistenfahrzeugen, bringt gegenüber dem Stand der Technik mit blossen Nyloneinlagen mehrere Vorteile. Ein wesentlicher Vorteil der vorliegenden Erfindung liegt darin, dass die Raupenbänder um einiges stärker als früher gebaut werden können und dass es dabei keine Verluste an der Elastizität und Biegsamkeit des Raupenbandes gibt. Dabei kann die geforderte Zugfestigkeit von 1600-2000 N/cm Bandbreite erreicht werden und dies über eine lange Gebrauchsdauer. Die hohe gewichtsspezifische Festigkeit der Aramid-Corde ermöglicht eine leichtere Bauweise des Bandes und verringert so die Eigenantriebsleistung.

Aramid-Fasern weisen eine hohe chemische Beständigkeit, einen kleinen Wärmeausdehnungskoeffizienten, exzellente Dimensionsstabilität und einen hohen Schnittwiderstand auf. Letzteres ist vor allem wichtig, weil die Raupenbänder in einem unwegsamen Gebiet schnell einmal von einem vorstehenden scharfen Felsen verletzt werden können.

Wegen der geringen Höhe des Zugstranggewebes 11 bzw. 21 kann dieses genau dort positioniert werden, wo die höchsten Belastungen auftreten. Da das Raupenband vorne von der Umlenkrolle 4 und hinten von der Antriebsrolle 5 umgelenkt wird, verschiebt sich die höchste Beanspruchung gegen das Umlenkzentrum. Wenn die Aramidfasereinlage in den inneren Drittel des Bandquerschnittes gelegt ist, kann der Kraftfluss und die Belastung auf das Raupenband optimiert werden.

Es ist ausserdem für den Antrieb als Ganzes sehr wichtig, dass sich das Raupenband über die gesamte Länge 2-7% kontrolliert dehnen kann, was man mit Hilfe des beschriebenen Cords erreichen kann. Damit wird die nötige Elastizität einerseits für den Fahrkomfort, andererseits für den Schutz der Antriebsbauteile erreicht. Eine zu starre Auslegung könnte nämlich durch die hohe Antriebsleistung zum Riss des Raupenbandes oder zum Versagen von Antriebselementen führen. Diese Dehnung erreicht man durch die vorstehend beschriebenen Gewebekonstruktionen.

Nicht nur der Aufbau und die Positionierung der Einlagen sind für die Erfüllung der Funktion wichtig, sondern auch wie die Kraft von den Stegen in das Zugstranggewebe eingeleitet wird. Nur wenn alle Parameter aufeinander abgestimmt sind, kann mit dieser Erfindung höchste Leistungen erzielt werden. Die gleiche Technologie könnte auch an anderen Raupenfahrzeugen zum Einsatz kommen wie z.B. im Deponie-Einsatz, in der Forstwirtschaft, in der Landwirtschaft oder für Einsätze in Schlamm oder Sand.

## Patentansprüche

1. Raupe für ein Fahrzeug, insbesondere für ein Pistenfahrzeug oder ein Loipenspurgerät, mit zumindest einem Raupenband (31,32,33,34), dessen Grundkörper (19) durch ein nachgiebiges Material gebildet ist, in welchem eine Lage (11) aus einem Gewebe zur Verstärkung des Materials eingebettet ist, **dadurch gekennzeichnet, dass** das Gewebe (11) einen Satz von Kettfäden (12) aufweist, welche im Grundkörper (19) des Raupenbandes (31,32,33,34) eingebettet ist, dass die Kettfäden (12) des Gewebes (11) in der Längsrichtung des Raupenbandes (31,32,33,34), verlaufen und aus als Zugstränge ausgebildete Aramid-Fasern sein, dass das Gewebe (21) ferner zwei Sätze (22,23) von Bändern bzw. flachen Filamenten (14) umfasst, welche senkrecht bzw. quer zur Zugrichtung des Raupenbandes (31,32,33,34), und somit auch senkrecht bzw. quer zur Längsrichtung der Kettfäden (12) verlaufen, dass diese Bänder (14) flache Nylonfilamente bzw. Nylonbändern sein können und dass die Bänder (14) in der Längsrichtung des Raupenbandes in Abständen voneinander bzw. hintereinander angeordnet sind.

2. Raupe nach Patentanspruch 1, **dadurch gekennzeichnet, dass** sich der erste Satz (22) der Bänder (14) oberhalb der Kettfäden (12) und der zweite Satz (23) der Bänder (14) unterhalb der Kettfäden (12) befindet, dass ein Band (14) des oben liegenden Bändersatzes (22) oberhalb eines Bandes (14) des unteren Bändersatzes (23) liegt und dass das jeweilige Band (14) der Sätze (22,23) geradlinig verläuft und mit einer seiner Grossflächen auf den Kettfäden (12) aufliegt.

3. Raupe nach Patentanspruch 1, **dadurch gekennzeichnet, dass** Haltemittel (24) für die Bänder (14) vorgesehen sind, dass das jeweilige Haltemittel (24) ein Paar von Fäden (25,26) umfasst, welche in der Längsrichtung des Raupenbandes (31,32,33,34) verlaufen und welche aus Nylon sein können, und dass die flachen Querbahnen bzw. die Nylonfilamente (14) mit den Fäden (25,26) der Hilfskette (24) verwoben sind.

4. Raupe nach Patentanspruch 3, **dadurch gekennzeichnet, dass** sich das jeweilige Haltemittel (24), d.h. die Fäden (25,26) dieses Haltemittels (24) zwischen zwei benachbarten Aramidfäden (12) der Hauptkette befinden, dass sich die Fäden (25,26) des jeweiligen Hilfskette (24) entlang der Längsrichtung des Raupenbandes (31,32,33,34) kreuzen, dass der jeweilige Kreuzungspunkt (27) dieser Fäden (25,26) der Hilfskette (24) zwischen zwei benachbarten bzw. aufeinander folgenden Bänderpaaren liegt, wobei ein Bänderpaar ein Band (14) des oben liegenden Satzes (22) und ein Band (14) des unten liegenden Satzes (23) umfasst, und dass die das jeweilige Paar der Bänder (14) einfassenden Fadenschlingen bzw. Fadenbogen, welche sich zwischen zwei aufeinander folgenden Kreuzungspunkten (27) der Fäden (25,26) erstrecken, auf der Aussenseite der Bänder (14) des betreffenden Paares aufliegen, sodass die genannten Bogen der Hilfsfäden (25,26) die dazwischen liegenden Bänder (14) gegeneinander hin drücken und auf die Aussenseite der Fäden (12) der Hauptkette pressen.

5. Raupe für ein Fahrzeug, insbesondere für ein Pistenfahrzeug oder ein Loipenspurgerät, mit zumindest einem Raupenband (31,32,33,34), dessen Grundkörper (19) durch ein nachgeibiges Material gebildet ist, in welchem eine Lage (11) aus einem Gewebe zur Verstärkung des Materials eingebettet ist, **dadurch gekennezeichnet, dass** das Gewebe (11) einen Satz von Kettfäden (12) aufweist, welche im Grundkörper (19) des Raupenbandes (31,32,33,34) eingebettet ist, dass das Gewebe (11) ferner einen Satz (13) von Paaren von Schussfäden (131,132) aufweist, dass die Kettfäden (12) in der Längsrichtung des Raupenbandes verlaufen und aus als Zugstränge ausgebildete Aramid-Fasern sein, dass die Schussfäden (131,132) senkrecht zur Längsrichtung des Raupenbandes verlaufen, wobei diese Schussfäden (131,132) aus Nylon sein, dass sich die Schussfäden (131,132) des Schusses (13) entlang ihrem Verlauf senkrecht zur Längsrichtung des Raupenbandes kreuzen und dass der jeweilige Kreuzungspunkt (133) der Schussfäden (131,132) des Schusses (13) zwischen zwei benachbarten Kettfäden (12) liegt.

6. Raupe nach Patentanspruch 1 oder 5, **dadurch gekennzeichnet, dass** die Aramidfaser-Zugstränge nicht im Zentrum der Dicke des Raupenbandes (31,32,33,34) liegen, sondern näher zum Umlenkzentrum des Raupenbandes angeordnet sind, und dass das Gewebe (11,21) in jenem Bereich, z.B. in jenem Drittel des Querschnittes des Raupenbandes (31,32,33,34) angeordnet sein kann, welches näher zu den Umlenkrollen (4,5) des Fahrzeugs liegt

7. Raupe nach Patentanspruch 6, **dadurch gekennzeichnet, dass** ein weiteres Zugstranggewebe (41) vorgesehen ist, dass dieses Zugstranggewebe (41) zwei senkrecht zueinander verlaufende Sätze von flachen Bändern (42.43) umfasst, welche untereinander wie eine Matte verflochten sind, dass diese Bänder (42.43) Nylonbänder sein können, und dass die Bänder (42) des ersten Satzes in der Längsrichtung des Raupenbandes (31,32,33,34) und die Bänder (43) des zweiten Satzes senkrecht zur Längsrichtung des Raupenbandes (31,32,33,34) verlaufen.

8. Raupe nach Patentanspruch 7, **dadurch gekennzeichnet, dass** das weitere Gewebe bzw. diese Matte (4)1 im oberen bzw. äusseren Bereich des Raupenbandes (31,32,33,34) eingebettet ist, dass sich diese Matte (41) somit oberhalb des Zugstranggewebes (11,21) befindet und praktisch parallel zu diesem Zugstranggewebe (11,21) verläuft, welches sich im unteren Bereich des Raupenbandes befindet und dass die Gewebe (11,21,41) vom Trägermaterial (19) zu einem elastischen Raupenband umgeben sind.

9. Raupe nach Patentanspruch 1 oder 5 , mit mehreren Raupenbändern, **dadurch gekennzeichnet, dass** zwei Gruppen von Stegen vorgesehen sind, welche sich senkrecht zur Längsrichtung der parallel zueinander verlaufen Raupenbänder (31,32,33,34) erstrecken und mit diesen Raupenbänder (31,32,33,34) verbunden sind, dass die Stege (3,6) der zwei Gruppen miteinander abwechseln, dass sich die Stege (3;6) über die ganze Breite des jeweiligen Bandes (31,32,33,34) erstecken, dass der jeweilige Steg (3;6) als eine Hohlprofil vorteilhaft aus Aluminium ausgeführt ist und dass die Stege (3,6) an den Bändern (31,32,33,34) befestigt sind.

10. Raupe nach Patentanspruch 9, **dadurch gekenzeichnet, dass** die Raupenbänder (33,34), welche vom Fahrgestell (7) des Fahrzeigs entfernt liegen, eine kleiner Zugfestigkeit aufweisen als jene Raupenbänder (31,32), welche am Fahrgestell näher liegen.

11. Raupe nach Patentanspruch 1 oder 5, **dadurch gekennzeichnet, dass** die Aramid-Fasern unter der Verwendung von Resorcin-Formatin-Latex- Lösung miteinander verbunden sind.

12. Raupe nach Patentanspruch 1 oder 5, **dadurch gekennzeichnet,dass** die Aramid-Fasern in Form eines Cords als Zugstränge eingesetzt sind.

## Claims

1. Caterpillar for a vehicle, in particular for a snow cat or for a cross country ski run tracked vehicle, with at least a caterpillar belt (31,32,33,34), whose basic body (19) is formed of a soft material, in which a layer (11) is embedded of a fabric for the reinforcement of the material, **characterized in that** the fabric (11) shows a set of warp threads (12), which is embedded in the basic body (19) of the caterpillar belt (31,32,33,34), that the warp threads (12) of the fabric (11) extend parallel to the axis of the caterpillar belt (31,32,33,34) and they are made of aramide fibres shaped as tension ropes, that the fabric (21) includes further two sets (22,23) of tapes and/or flat filaments (14), which run vertically and/or cross to the tensile direction of the caterpillar belt (31,32,33,34) and consequently also vertically and/or cross to the longitudinal direction of the warp threads (12), that these tapes (14) can be flat nylon filaments and/or flat nylon tapes and that said tapes (14) are located along the longitudinal direction of the caterpillar belt in distances of each other and/or behind each other.

2. Caterpillar according to claim 1, **characterized in that** the first set (22) of the tape (14) is above the warp threads (12) and the second set (23) of the tape (14) below the warp threads (12), that one tape (14) of the face-up tape set (22) lies above a tape (14) of the lower tape set (23), that the respective tape (14) of the set (22,23) runs rectilinearly, and that the respective tape (14) of the sets (22,23) lies on the warp threads (12) with one of his big faces.

3. Caterpillar according to claim 1, **characterized in that** holding means (24) (14) for the tapes are foreseen, that the respective holding means (24) include a pair of threads (25,26) which run in the longitudinal direction of the caterpillar belt (31,32,33,34) and which ones can be of nylon, and that the flat transverse tapes and/or the nylon filaments (14) are woven with the threads (25,26) of the auxiliary warp (24).

4. Caterpillar according to claim 3, **characterized in that** the respective holding means (24), i.e. the threads (25,26) of this holding means (24), are located between two neighboring aramide threads (12) at the main warp, that the threads (25,26) of the respective auxiliary warp (24) are crossed in the longitudinal direction of the caterpillar belt (31,32,33,34), that the respective cross point (27) of these threads (25,26) of the auxiliary warp (24) lies between two neighboring and/or following in each other pairs of tapes, whereby one pair of tapes includes a tape (14) of the above lying set (22) and a tape (14) of the below lying set (23), and that the snarls and/or curves of the threads bordering the respective pair of the tapes (14), which extend between two cross points following one on oanther (27) of the thread (25,26), lie on the outer side of the tapes (14) of the respective pair, so that the mentioned curves of the auxiliary threads (25,26) press the tapes (14) lying though between against each other and onto the outer side of the threads (12) of the main warp.

5. Caterpillar for a vehicle, in particular for a snow cat or a cross country ski run tracked vehicle, with at least one caterpillar belt (31,32,33,34), whose basic body (19) is formed of a soft material, in which a layer (11) is embedded of a fabric for the reinforcement of the material, **characterized in that** the fabric (11) shows a set of warp threads (12), which are embedded in the basic body (19) of the caterpillar belt (31,32,33,34), that the fabric (11) further shows a set (13) of pairs of weft threads (131,132), that the warp threads (12) run in the longitudinal direction of the caterpillar belt and are aramide fibres shaped as tension ropes, that the weft threads (131,132) run perpendicularly to the longitudinal direction of the caterpillar belt, whereby these weft threads (131,132) are of nylon, that the weft threads (131,132) of the weft (13) cross itself along the run vertically to the longitudinal direction of the caterpillar belt and that the respective crossing point (133) of the weft threads (131,132) of the weft (13) lies between two neighboring warp threads (12).

6. Caterpillar according to claim 1 or 5, **characterized in that** the tension ropes of the aramide fibres do not lie in the center of the thickness of the caterpillar belt (31,32,33,34), but they are arranged nearer to the turn round center of the caterpillar belt, and that the fabric (11,21) can be arranged **in that** area, for example **in that** one third of the cross-section of the caterpillar belt (31,32,33,34), which lies nearerly to the pulleys (4,5) of the vehicle.

7. Caterpillar according to claim 6, **characterized in that** a further tension rope fabric (41) is foreseen, that this tension rope fabric (41) includes two perpendicular to each other running sets of flat tapes (42,43), which are braided among each other like a mat, that these tapes (42.43) can be nylon tapes, that the tapes (42) of the first set run parallel to the longitudinal direction of the caterpillar belt (31,32,33,34), and that the tapes (43) of the second set run perpendicularly to the longitudinal direction of the caterpillar belt (31,32,33,34).

8. Caterpillar according to claim 7, **characterized in that** the further fabric and/or this mat (41) is embedded in the upper and/or external area of the caterpillar belt (31,32,33,34), that consequently this mat (41) is above the tension rope fabric (11,21) and it runs virtually parallel to this tension rope fabric (11,21), which is in the lower area of the caterpillar belt, and that the fabrics (11,21,41) are encircled by the base material (19) to an elastic caterpillar belt.

9. Caterpillar according to claim 1 or 5, having several caterpillar belts, **characterized in that** two groups of webs are foreseen which extend perpendicularly to the longitudinal direction of the parallel to each other running caterpillar belts (31,32,33,34) and are connected with these caterpillar belts (31,32,33,34), that the webs (3,6) of the two groups alternate, that the webs (3;6) extend over the whole width of the respective belts (31,32,33,34), that the respective web (3;6) is shaped as a hollow profile advantegeously of aluminum and that the webs (3,6) are fixed to the belts (31,32,33,34).

10. Caterpillar according to claim 9, **characterized in that** the caterpillar belts (33,34) which are located in a distance to the chassis (7) of the vehicle, show a smaller tensile strength than those caterpillar belts (31,32) which are located nearer to the chassis.

11. Caterpillar according to claim 1 or 5, **characterized in that** the aramide fibres are connected together with each other by a Resorcin-Formatin-latex solution.

12. Caterpillar according to claim 1 or 5, **characterized in that** the aramide fibres are used as tension ropes in the form of a cord.

## Revendications

1. Chenille pour un véhicule, notamment pour un véhicule dameur de pistes ou un traceur de piste de ski de fond, comprenant au moins une bande de chenille (31, 32, 33, 34) dont le corps de base (19) est formé par un matériau flexible, dans lequel est noyée une couche (11) en tissu pour le renforcement du matériau, **caractérisée en ce que** le tissu (11) présente un jeu de fils de chaîne (12) qui est noyé dans le corps de base (19) de la bande de chenille (31, 32, 33, 34), **en ce que** les fils de chaîne (12) du tissu (11) s'étendent dans la direction longitudinale de la bande de chenille (31, 32, 33, 34) et sont constitués de fibres d'aramide réalisées sous forme de câbles, **en ce que** le tissu (21) comprend en outre deux jeux (22, 23) de bandes ou de filaments plats (14), qui s'étendent perpendiculairement ou transversalement à la direction de traction de la bande de chenille (31, 32, 33, 34), et donc également perpendiculairement ou transversalement à la direction longitudinale des fils de chaîne (12), **en ce que** ces bandes (14) peuvent être des filaments de nylon plats ou des bandes de nylon plates et **en ce que** les bandes (14) sont disposées dans la direction longitudinale de la bande de chenille les unes derrière les autres de manière espacée les unes des autres.

2. Chenille selon la revendication 1, **caractérisée en ce que** le premier jeu (22) des bandes (14) se trouve au-dessus des fils de chaîne (12) et le deuxième jeu (23) des bandes (14) se trouve en dessous des fils de chaîne (12), **en ce qu'**une bande (14) du jeu de bandes supérieur (22) se trouve au-dessus d'une bande (14) du jeu de bandes inférieur (23) et **en ce que** la bande respective (14) des jeux (22, 23) s'étend en ligne droite et s'applique avec une de ses grandes surfaces sur les fils de chaîne (12).

3. Chenille selon la revendication 1, **caractérisée en ce que** des moyens de retenue (24) pour les bandes (14) sont prévus, **en ce que** le moyen de retenue respectif (24) comprend une paire de fils (25, 26) qui s'étendent dans la direction longitudinale de la bande de chenille (31, 32, 33, 34) et qui peuvent être en nylon, et **en ce que** les bandes transversales ou les filaments en nylon (14) sont tissés avec les fils (25, 26) de la chaîne auxiliaire (24).

4. Chenille selon la revendication 3, **caractérisée en ce que** le moyen de retenue respectif (24), c'est-à-dire les fils (25, 26) de ce moyen de retenue (24), se trouvent entre deux fils d'aramide voisins (12), **en ce que** les fils (25, 26) de la chaîne auxiliaire respective (24) se croisent le long de la direction longitudinale de la bande de chenille (31, 32, 33, 34), **en ce que** le point d'intersection respectif (27) de ces fils (25, 26) de la chaîne auxiliaire (24) se trouve entre deux paires de bandes voisines ou successives, une paire de bandes comprenant une bande (14) du jeu supérieur (22) et une bande (14) du jeu inférieur (23), et **en ce que** les boucles de fils ou les arcs de fils entourant la paire de bandes (14) respective, qui s'étendent entre deux points d'intersection successifs (27) des fils (25, 26), s'appliquent sur le côté extérieur des bandes (14) de la paire concernée, de sorte que lesdits arcs de fils auxiliaires (25, 26) pressent les bandes intermédiaires (14) entre eux et pressent sur le côté extérieur des fils (12) de la chaîne principale.

5. Chenille pour un véhicule, notamment pour un véhicule dameur de pistes ou un traceur de piste de ski de fond, comprenant au moins une bande de chenille (31, 32, 33, 34) dont le corps de base (19) est formé par un matériau flexible, dans lequel est noyée une couche (11) en tissu pour le renforcement du matériau, **caractérisée en ce que** le tissu (11) présente un jeu de fils de chaîne (12) qui est noyé dans le corps de base (19) de la bande de chenille (31, 32, 33, 34), **en ce que** le tissu (11) présente en outre un jeu (13) de paires de fils de trame (131, 132), **en ce que** les fils de chaîne (12) s'étendent dans la direction longitudinale de la bande de chenille et sont constitués de fibres d'aramides réalisées sous forme de câbles, **en ce que** les fils de trame (131, 132) s'étendent perpendiculairement à la direction longitudinale de la bande de chenille, ces fils de trame (131, 132) étant en nylon, **en ce que** les fils de trame (131, 132) de la trame (13) se croisent le long de leur étendue perpendiculairement à la direction longitudinale de la bande de chenille et **en ce que** le point d'intersection respectif (133) des fils de trame (131, 132) de la trame (13) se situe entre deux fils de chaîne adjacents (12).

6. Chenille selon la revendication 1 ou 5, **caractérisée en ce que** les câbles de fibres d'aramide ne se situent pas au centre de l'épaisseur de la bande de chenille (31, 32, 33, 34) mais sont disposés plus près du centre de déviation de la bande de chenille, et **en ce que** le tissu (11, 21) peut être disposé dans la région, par exemple dans le tiers de la section transversale de la bande de chenille (31, 32, 33, 34) qui est situé plus près des rouleaux déflecteurs (4, 5) du véhicule.

7. Chenille selon la revendication 6, **caractérisée en ce que** l'on prévoit un autre tissu de câble (41), **en ce que** ce tissu de câble (41) comprend deux jeux s'étendant perpendiculairement l'un à l'autre de bandes plates (42, 43), qui sont tressées ensemble comme un mat, **en ce que** ces bandes (42, 43) peuvent être des bandes de nylon, et **en ce que** les bandes (42) du premier jeu s'étendent dans la direction longitudinale de la bande de chenille (31, 32, 33, 34) et les bandes (43) du deuxième jeu s'étendent perpendiculairement à la direction longitudinale de la bande de chenille (31, 32, 33, 34).

8. Chenille selon la revendication 7, **caractérisée en ce que** l'autre tissu ou ce mat (41) est noyé dans la région supérieure ou extérieure de la bande de chenille (31, 32, 33, 34), **en ce que** ce mat (41) se trouve ainsi au-dessus du tissu de câble (11, 21) et s'étend pratiquement parallèlement à ce tissu de câble (11, 21), qui se trouve dans la région inférieure de la bande de chenille et **en ce que** les tissus (11, 21, 41) sont entourés par le matériau de support (19) pour former une bande de chenille élastique.

9. Chenille selon la revendication 1 ou 5, comprenant plusieurs bandes de chenille, **caractérisée en ce que** deux groupes de nervures sont prévus, lesquels s'étendent perpendiculairement à la direction longitudinale des bandes de chenille parallèles (31, 32, 33, 34) et sont connectés à ces bandes de chenille (31, 32, 33, 34), **en ce que** les nervures (3, 6) des deux groupes sont alternées, **en ce que** les nervures (3 ; 6) s'étendent sur toute la largeur de la bande respective (31, 32, 33, 34), **en ce que** la nervure respective (3 ; 6) est réalisée sous la forme d'un profil creux de préférence en aluminium et **en ce que** les nervures (3, 6) sont fixées sur les bandes (31, 32, 33, 34).

10. Chenille selon la revendication 9, **caractérisée en ce que** les bandes de chenille (33, 34), qui sont éloignées du châssis (7) du véhicule présentent une résistance à la traction inférieure aux bandes de chenille respectives (31, 32), qui sont situées plus près sur le châssis.

11. Chenille selon la revendication 1 ou 5, **caractérisée en ce que** les fibres d'aramide sont connectées les unes aux autres en utilisant une solution de latex à base de résorcine-formatine.

12. Chenille selon la revendication 1 ou 5, **caractérisée en ce que** les fibres d'aramide sont utilisées sous forme de corde en tant que câbles.
